# EUROPÄISCHE PATENTSCHRIFT

(11) **EP 3 024 680 B1**
(45) Veröffentlichungstag und Bekanntmachung des Hinweises auf die Patenterteilung: **14.06.2017**
(21) Anmeldenummer: 14739040.5
(22) Anmeldetag: 02.07.2014
(51) Int. Cl.: B60J 10/18, B60J 10/30, B60J 10/70, B60J 10/34

(54) **ABDICHTUNGSANORDNUNG FÜR EIN KRAFTFAHRZEUG**
SEALING ARRANGEMENT FOR A MOTOR VEHICLE
ARRANGEMENT D'ÉTANCHÉITÉ POUR UN VÉHICULE AUTOMOBILE

(30) Priorität: 25.07.2013 DE 202013103364 U
(43) Veröffentlichungstag der Anmeldung: 01.06.2016
(73) Patentinhaber: REHAU AG + Co, 95111 Rehau (DE)
(72) Erfinder: FRANK, Michael, 95145 Oberkotzau (DE); RINCK, Kay-Jochen, 95032 Hof (DE); LAUKANT, Holger, 95032 Hof (DE)
(86) Internationale Anmeldenummer: PCT/EP2014/001817
(87) Internationale Veröffentlichungsnummer: WO 2015/010765

(56) Entgegenhaltungen:
- DE-A1- 10 322 637
- DE-A1-102006 038 013
- DE-A1-102008 003 252
- DE-A1-102009 010 015
- DE-A1-102010 056 495
- DE-A1-102011 056 955
- FR-A1- 2 952 900

## Beschreibung

Die Erfindung betrifft eine Abdichtungsanordnung für ein Kraftfahrzeug mit den Merkmalen des Oberbegriffs des Patentanspruchs 1.
Eine derartige Abdichtungsanordnung ist beispielsweise aus der EP 1 280 675 B1 bekannt. Das in dieser Druckschrift beschriebene Abdichtungsprofil dient zum Anschluss einer Wasserkastenabdeckung an den unteren Rand einer Windschutzscheibe eines Kraftfahrzeuges. Wesentlich bei diesem Stand der Technik ist, dass die einander benachbarten Oberflächen von Scheibe, Wasserkastenabdeckung und dazwischen angeordneter Dichtlippe fluchten, so dass insgesamt eine glatte Oberfläche vorliegt. Auch Dokument DE 10 2010 056 495 A1 und das gattungsgemäße DE 10 2011 056 955 A1 zeigen solche Abdichtungsanordnungen.
In jüngerer Zeit gewinnt das Thema Schallemission im Inneren eines Kraftfahrzeugs zunehmend an Bedeutung. Dies führt dazu, dass Windschutzscheiben tendenziell immer dicker werden, um hierdurch Schallemissionen von der Fahrgastzelle fernzuhalten. Hieraus ergibt sich in der Praxis häufig das Problem, dass die Oberflächen von Windschutzscheibe und Wasserkastenabdeckung nicht mehr fluchtend zueinander ausgerichtet sein können, sondern stattdessen zwischen diesen Oberflächen ein Höhenversatz vorliegt. Dieser Höhenversatz der Wasserkastenabdeckung nach unten hat auch gewisse sicherheitstechnische Vorteile, wenn die Scheibenwischer der Windschutzscheibe in Ruheposition auf der Wasserkastenabdeckung zu liegen kommen. Denn durch den Höhenversatz der Wasserkastenabdeckung ist die Ruheposition der Scheibenwischer entsprechend gegenüber der Windschutzscheibe auch etwas niedriger, was in einer Unfallsituation bei einem Aufprall eines Fußgängers auf die Motorhaube/Windschutzscheibe das Verletzungsrisiko reduziert. Vor diesem Hintergrund liegt der Erfindung die Aufgabe zugrunde, eine Abdichtungsanordnung mit den eingangs beschriebenen Merkmalen anzugeben, die auch bei einem Höhenversatz zwischen Scheibe und Anschlusselement die vollständige Funktionsfähigkeit der Frontscheibenwischer sicherstellt.

Erfindungsgemäß wird diese Aufgabe durch die Merkmale im Kennzeichnungsteil des Anspruchs 1 gelöst. Erfindungsgemäß wird also von dem aus der EP 1 280 675 B1 bekannten Stand der Technik abgewichen, der grundsätzlich von einem Fluchten von Scheibenoberfläche und Oberfläche der Wasserkastenabdeckung ausgeht. Erfindungsgemäß wird durch die treppenförmige Anordnung von Winschutzscheibe, Halteprofil und Wasserkastenabdeckung der Höhenversatz zwischen der oberen Oberfläche der Windschutzscheibe und der oberen Oberfläche der Wasserkastenabdeckung abgemildert. Dies führt vorteilhafterweise dazu, dass trotz des Höhenversatzes eine störungsfreie Wischbewegung eines Scheibenwischers über das untere Ende der Windschutzscheibe hinweg und auch zurück möglich ist, da zwischen Windschutzscheibe und Dichtlippe sowie zwischen Dichtlippe und Wasserkastenabdeckung jeweils nur ein reduzierter Höhenversatz vorliegt, der vom Scheibenwischer problemlos überwunden werden kann. Die auf halber Höhe angeordnete Dichtlippe verhindert somit einen großen "Höhensprung" zwischen der Unterkante der Windschutzscheibe und dem oberen Rand der Wasserkastenabdeckung, so dass erfindungsgemäß die Funktionssicherheit eines Scheibenwischers auch beim Überstreichen dieses Übergangsbereichs gewährleistet ist. Die im Montagezustand freie Oberfläche der Dichtlippe entspricht in der Regel dem außen am Fahrzeug sichtbaren Bereich des Halteprofils. Die freie Oberfläche der Dichtlippe ist eben ausgebildet.

Die Dichtlippe kann im Montagezustand einen zumindest im Wesentlichen trapezförmigen Querschnitt aufweisen. Trapezförmig meint einen viereckigen Querschnitt, bei dem mindestens zwei Seiten des Vierecks parallel zueinander ausgerichtet sind. Dies sind zweckmäßigerweise die Flächen der Dichtlippe, welche der Wasserkastenabdeckung bzw. der Scheibe zugewandt sind. Entsprechend liegt eine dieser beiden parallel zueinander ausgerichteten Flächen der Dichtlippe an der Scheibe dichtend an und verhindert an dieser Stelle ein Eindringen von Wasser in den Bereich unterhalb der Scheibenoberkante. Zwischen der der Wasserkastenabdeckung zugewandten Fläche der Dichtlippe und der Wasserkastenabdeckung selbst kann ebenfalls ein mehr oder weniger stark ausgeprägter Anschlag mit entsprechender Presswirkung vorliegen. Im Rahmen der Erfindung liegt es aber auch, dass hier ein kleiner freier Spalt vorliegt.

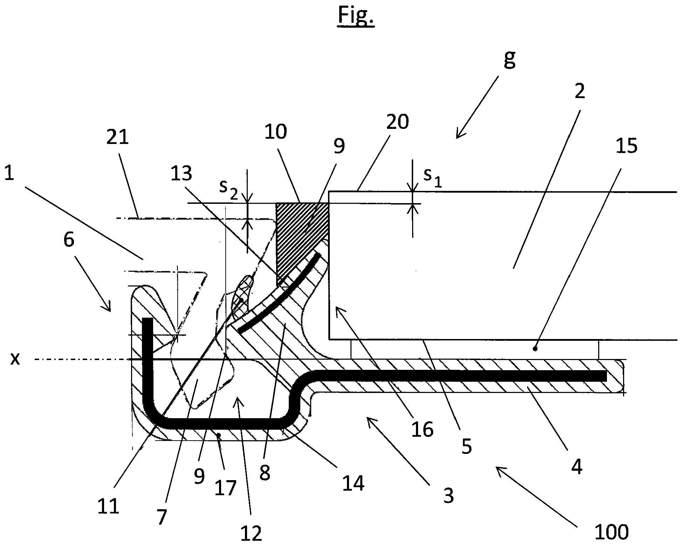

Wie bereits erläutert, verbleibt am Übergang zwischen dem oberen Rand der Windschutzscheibe und dem oberen Rand der Dichtlippe und am Übergang zwischen dem oberen Rand der Dichtlippe und dem oberen Rand der Wasserkastenabdeckung ein reduzierter Höhenversatz. Hierdurch ist ferner sichergestellt, dass auch unter Berücksichtigung fertigungstechnisch bedingter Toleranzen in jedem Fall kein Überstehen der Dichtlippe beim Übergang von der Scheibe zur Dichtlippe bzw. kein Überstand der Wasserkastenabdeckung beim Übergang von der Dichtlippe hin zur Wasserkastenabdeckung vorliegt. Diese Gefahr bestünde bei einem bündigen Anschluss der freien Oberfläche der Dichtlippe an die Höhe der Scheibe bzw. der Höhe der Wasserkastenabdeckung. Erfindungsgemäß springt von der Außenoberfläche der Scheibe aus gesehen die Dichtlippe um einen ersten Höhenversatz s₁ und / oder die Wasserkastenabdeckung um einen Höhenversatz s₂ nach unten. Erfindungsgemäß beträgt sowohl der Höhenversatz s₁ als auch der Höhenversatz s₂ mindestens 1 mm, beispielsweise mindestens 1,5 mm, bei einer besonders dicken Scheibe auch z.B. mindestens 2 mm.
Im Folgenden wird die Erfindung anhand einer lediglich ein Ausführungsbeispiel darstellenden Zeichnung ausführlich erläutert:
Die einzige Figur zeigt schematisch eine erfindungsgemäße Abdichtungsanordnung in der Querschnittsdarstellung im montierten Zustand.
Die Figur zeigt ein Abdichtungsprofil 100 zum Anschluss einer Wasserkastenabdeckung 1 an eine Windschutzscheibe 2 eines (nicht näher dargestellten) Kraftfahrzeuges. Das Abdichtungsprofil 100 weist ein extrudiertes Kunststoff-Halteprofil 3 auf. Dieses besitzt einen Halteschenkel 4, der im Montagezustand an der unteren, dem Kraftfahrzeugboden zugewandten (s.a. eingezeichnete Richtung der Gravitationskraft g) Oberfläche 5 der Windschutzscheibe 2 befestigt ist, ein als Rastprofil ausgebildetes Aufnahmeprofil 6 zur Aufnahme eines als Rastelement ausgebildeten Anschlusselementes 7 der Wasserkastenabdeckung 1 und ein im Montagezustand zwischen Wasserkastenabdeckung 1 und Windschutzscheibe 2 angeordneten Stützkörper 8. An dem Stützkörper 8 ist eine Dichtlippe 9 aus weichelastischem Material - beispielsweise einem elastomeren Kunststoff - angeordnet, die im Montagezustand an der Windschutzscheibe 2 dichtend anliegt. Der Figur ist entnehmbar, dass die Dichtlippe 9 an ihrem oberen Rand eine im Montagezustand freie Oberfläche 10 aufweist, die parallel zur äußeren Oberfläche 20 der Windschutzscheibe 2, zur Außenoberfläche 21 der Wasserkastenabdeckung 1 und auch zur Halteschenkelebene x ausgerichtet ist. Diese freie Oberfläche 10 ist eben ausgebildet. Die Dichtlippe 9 weist im Montagezustand einen trapezförmigen Querschnitt auf, wobei die beiden parallel zueinander ausgerichteten Oberflächen der Dichtlippe 9 der Wasserkastenabdeckung 1 bzw. der Windschutzscheibe 2 zugewandt sind.

Insgesamt zeigt die Figur eine Abdichtungsanordnung mit Scheibe 2, Wasserkastenabdeckung 1 und dem zuvor beschriebenen, zwischen Scheibe 2 und Wasserkastenabdeckung 1 angeordneten Abdichtungsprofil 100, welches zum Anschluss der Wasserkastenabdeckung 1 an die Scheibe 2 dient. Es ist erkennbar, dass am Übergang zwischen der Berandung der äußeren Oberfläche 20 der Scheibe 2 und der Berandung der freien Oberfläche 10 der Dichtlippe 9 ein Höhenversatz s₁ und ebenso am Übergang zwischen der Berandung der freien Oberfläche 10 der Dichtlippe 9 und der Berandung der Außenoberfläche 21 der Wasserkastendeckung 1 ein Höhenversatz s₂ vorliegt. Von der Scheibe 2 aus gesehen springt die Dichtlippe 9 um den Höhenversatz s₁ und die Wasserkastenabdeckung 1 um den Höhenversatz s₂ nach unten. Sowohl der Höhenversatz s₁ als auch der Höhenversatz s₂ beträgt mindestens 1 mm.

Der Figur ist ferner entnehmbar, dass das Halteprofil 3 eine zweite Dichtlippe 11 aus einem weichelastischen Material aufweist. Diese zweite Dichtlippe 11 ist in der Figur im unbelasteten Zustand dargestellt. Bei der Montage der Wasserkastenabdeckung 1 rastet dessen Anschlusselement 7 in das Aufnahmeprofil 6 des Halteprofils 3 ein und drückt hierbei die zweite Dichtlippe 11 nach rechts, so dass sie den Rastbereich 12 des Aufnahmeprofils 6 gegen eindringende Feuchtigkeit abdichtet. Der Stützkörper 8 weist zur Verstärkung ein Armierungselement 13 auf. Es ist ferner erkennbar, dass Halteschenkel 4 und Aufnahmeprofil 6 über eine gemeinsame metallische Armierungslage 14 miteinander verbunden sind. Die Armierungseinlage 14 ist im Bereich des Anschlussprofils 6 lediglich bereichsweise vom Kunststoffmaterial umspritzt. Der Halteschenkel 4 ist mittels eines Klebstoffstreifens 15 an der unteren Oberfläche 5 der Scheibe 2 befestigt, während zwecks Herstellung einer sicheren Abdichtung des Übergangs zwischen Scheibe 2 und Stützkörper 8 durch die Dichtlippe 9 der Stützkörper gegen den unteren Scheibenrand 16 gepresst ist. Das Aufnahmeprofil 6 weist einen Bodenabschnitt 17 auf, der im wesentlichen parallel zur Halteschenkelebene x ausgerichtet ist.

## Patentansprüche

1. Abdichtungsanordnung für ein Kraftfahrzeug mit
- einer Windschutzscheibe (2) eines Kraftfahrzeugs,
- einer Wasserkastenabdeckung (1) und
- einem zwischen Windschutzscheibe (2) und Wasserkastenabdeckung (1) angeordneten Abdichtungsprofil (100) zum Anschluss der Wasserkastenabdeckung (1) an die Windschutzscheibe (2),
wobei das Abdichtungsprofil (100) ein Halteprofil (3) aufweist mit
- einem an der unteren Oberfläche (5) der Windschutzscheibe (2) befestigten Halteschenkel (4),
- einem Aufnahmeprofil (6) zur Aufnahme eines Anschlusselements (7) der Wasserkastenabdeckung (1),
- einem zwischen Wasserkastenabdeckung (1) und Windschutzscheibe (2) angeordneten Stützkörper (8) und
- einer am Stützkörper (8) angeordneten, zumindest an der Windschutzscheibe (2) dichtend anliegenden Dichtlippe (9),
wobei die Dichtlippe (9) an ihrem oberen Rand eine freie Oberfläche (10) aufweist, die eben ausgebildet und sowohl parallel zur äußeren Oberfläche (20) der Windschutzscheibe (2) als auch parallel zur Außenoberfläche (21) der Wasserkastenabdeckung (1) ausgerichtet ist, **dadurch gekennzeichnet, dass** Windschutzscheibe (2), Halteprofil (3) und Wasserkastenabdeckung (1) treppenförmig angeordnet sind, wobei sowohl am Übergang zwischen dem oberen Rand der Windschutzscheibe (2) und dem oberen Rand der Dichtlippe (9) ein Höhenversatz (s₁) als auch am Übergang zwischen dem oberen Rand der Dichtlippe (9) und dem oberen Rand der Wasserkastenabdeckung (1) ein Höhenversatz (s₂) vorliegt, wobei durch die treppenförmige Anordnung der Höhenversatz zwischen der oberen Oberfläche der Windschutzscheibe (2) und der oberen Oberfläche der nach unten versetzten Wasserkastenabdeckung (1) abgemildert wird und wobei sowohl der Höhenversatz (s₁) als auch der Höhenversatz (s₂) mindestens 1 mm beträgt.

2. Abdichtungsanordnung nach Anspruch 1, **dadurch gekennzeichnet, dass** die Dichtlippe (9) im Montagezustand einen zumindest im wesentlichen trapezförmigen Querschnitt aufweist.

3. Abdichtungsanordnung nach Anspruch 1 oder 2, **dadurch gekennzeichnet, dass** von der Windschutzscheibe (2) aus gesehen die Dichtlippe (9) um den Höhenversatz (s₁) und die Wasserkastenabdeckung (1) um den Höhenversatz (s₂) nach unten springt.

4. Abdichtungsanordnung nach einem der Ansprüche 1 bis 3, **dadurch gekennzeichnet, dass** der Höhenversatz (s₁) und/oder der Höhenversatz (s₂) mindestens 2 mm beträgt.

## Claims

1. Sealing arrangement for a motor vehicle, comprising
- a windscreen (2) of a motor vehicle,
- a water tank cover (1), and
- a sealing profile (100) which is arranged between the windscreen (2) and water tank cover (1) and is intended for connecting the water tank cover (1) to the windscreen (2),
wherein the sealing profile (100) has a retaining profile (3), comprising
- a retaining limb (4), which is fastened on the lower surface (5) of the windscreen (2),
- an accommodating profile (6) for accommodating a connection element (7) of the water tank cover (1),
- a supporting body (8), which is arranged between the water tank cover (1) and windscreen (2), and
- a sealing lip (9), which is arranged on the supporting body (8) and butts with sealing action at least against the windscreen (2),
wherein, on its upper periphery, the sealing lip (9) has a free surface (10), which is of flat design and is oriented both parallel to the outer surface (20) of the windscreen (2) and also parallel to the outer surface (21) of the water tank cover (1), **characterized in that** the windscreen (2), holding profile (3) and water tank cover (1) are arranged in a stepped manner, wherein there is an offset in height (s1), both at the transition between the upper periphery of the windscreen (2) and the upper periphery of the sealing lip (9), and there is an offset in height (s₂) at the transition between the upper periphery of the sealing lip (9) and the upper periphery of the water tank cover (1), wherein the offset in height between the upper surface of the windscreen (2) and the upper surface of the downwardly offset water tank cover (1) is mitigated by the stepped arrangement, and wherein both the offset in height (s1) and the offset in height (s₂) is at least 1 mm.

2. Sealing arrangement according to Claim 1, **characterized in that**, in the installed state, the sealing lip (9) has an at least substantially trapezoidal cross section.

3. Sealing arrangement according to Claim 1 or 2, **characterized in that**, as seen from the windscreen (2), the sealing lip (9) is set back in the downwards direction by the offset in height (s₁) and the water tank cover (1) is set back in the downwards direction by the offset in height (s₂).

4. Sealing arrangement according to one of Claims 1 to 3, **characterized in that** the offset in height (s₁) and/or the offset in height (s₂) are/is at least 2 mm.

## Revendications

1. Agencement d'étanchéité pour un véhicule automobile, comprenant
- un pare-brise (2) d'un véhicule automobile,
- un recouvrement de boîte à eau (1) et
- un profilé d'étanchéité (100) disposé entre le pare-brise (2) et le recouvrement de boîte à eau (1) pour le raccordement du recouvrement de boîte à eau (1) au pare-brise (2),
le profilé d'étanchéité (100) présentant un profilé de retenue (3) comprenant
- une branche de retenue (4) fixée à la surface inférieure (5) du pare-brise (2),
- un profilé de réception (6) pour recevoir un élément de raccordement (7) du recouvrement de boîte à eau (1),
- un corps de support (8) disposé entre le recouvrement de boîte à eau (1) et le pare-brise (2), et
- une lèvre d'étanchéité (9) disposée au niveau du corps de support (8), s'appliquant de manière étanche au moins contre le pare-brise (2),
la lèvre d'étanchéité (9) présentant, au niveau de son bord supérieur, une surface libre (10) qui est réalisée de manière plane et qui est orientée à la fois parallèlement à la surface extérieure (20) du pare-brise (2) et parallèlement à la surface extérieure (21) du recouvrement de boîte à eau (1), **caractérisé en ce que** le pare-brise (2), le profilé de retenue (3) et le recouvrement de boîte à eau (1) sont disposés de manière étagée, un décalage en hauteur (s1) étant prévu au niveau de la transition entre le bord supérieur du pare-brise (2) et le bord supérieur de la lèvre d'étanchéité (9) et un décalage en hauteur (s₂) étant prévu également au niveau de la transition entre le bord supérieur de la lèvre d'étanchéité (9) et le bord supérieur du recouvrement de boîte à eau (1), le décalage en hauteur entre la surface supérieure du pare-brise (2) et la surface supérieure du recouvrement de boîte à eau décalé vers le bas (1), en raison de l'agencement de forme étagée, étant atténué et le décalage en hauteur (s1) ainsi que le décalage en hauteur (s₂) valant au moins 1 mm.

2. Agencement d'étanchéité selon la revendication 1, **caractérisé en ce que** la lèvre d'étanchéité (9), dans l'état de montage, présente une section transversale au moins essentiellement de forme trapézoïdale.

3. Agencement d'étanchéité selon la revendication 1 ou 2, **caractérisé en ce que**, vu depuis le pare-brise (2), la lèvre d'étanchéité (9) fait saillie vers le bas dans la mesure du décalage en hauteur (s₁) et le recouvrement de boîte à eau (1) fait saillie vers le bas dans la mesure du décalage en hauteur (s₂).

4. Agencement d'étanchéité selon l'une quelconque des revendications 1 à 3, **caractérisé en ce que** le décalage en hauteur (s₁) et/ou le décalage en hauteur (s₂) valent au moins 2 mm.
